Europäisches Patentamt

(19) European Patent Office

Office européen des brevets

(11) Numéro de publication: **0 199 659**

**A1**

## (12) DEMANDE DE BREVET EUROPEEN

(21) Numéro de dépôt: **86420042.3**

(22) Date de dépôt: **12.02.86**

(51) Int. Cl.⁴: **C 08 K 3/26**
C 08 L 23/12, C 08 K 9/04
C 08 K 9/08
//(C08L23/12, C08K3:26, 5:09),
(C08L23/12, C08K9:04),
(C08L23/12, C08K3:26,
C08L23:30), (C08L23/12,
C08K9:08)

(30) Priorité: **13.02.85 FR 8502326**

(43) Date de publication de la demande:
**29.10.86 Bulletin 86/44**

(84) Etats contractants désignés:
**AT BE CH DE FR GB IT LI LU NL SE**

(71) Demandeur: **SEPEREF-TMP**
**Zone Industrielle de Quincieux**
**F-69650 Saint-Germain-au-Mont-d'Or(FR)**

(72) Inventeur: **Kuranda, Jean-Claude**
**Frans Les Vernes**
**F-01480 Jassans-Riottier(FR)**

(72) Inventeur: **Parron, Thierry Chemin des Vondières**
**St-Romain-au-Mont d'Or**
**F-69270 Fontaines Sur Saone(FR)**

(74) Mandataire: **Maureau, Philippe et al,**
**Cabinet Germain & Maureau Le Britannia - Tour C 20, bld**
**Eugène Déruelle**
**F-69003 Lyon(FR)**

(54) Compositions de résines de polypropylène chargées à résistance au choc améliorée et tubes et profilés obtenus à partir de ces compositions.

(57) La résistance des compositions de résines de polypropylène fortement chargées, à au moins 50 % de carbonate de calcium, est améliorée dans des proportions notables par addition d'une quantité relativement faible d'un additif choisi parmi les sels alcalinoterreux d'acides gras saturés et les cires de polyéthylène oxydées.

Tubes et profilés résistant au choc obtenus à partir de ces compositions.

1

# COMPOSITIONS DE RESINES DE POLYPROPYLENE CHARGEES
## A RESISTANCE AU CHOC AMELIOREE
### ET TUBES ET PROFILES OBTENUS A PARTIR DE CES COMPOSITIONS

La présente invention concerne des compositions de résines de polypropylène chargées à résistance au choc améliorée ainsi que les tubes et profilés obtenus à partir de ces compositions.

On utilise, de plus en plus, notamment pour des raisons économiques et dans le but d'améliorer la rigidité et la stabilité dimensionnelle des produits obtenus des compositions à base de résine de polypropylène à laquelle ont été ajoutées des quantités souvent importantes de charges telles que le carbonate de calcium, le talc, la farine de bois, etc...

On sait, par ailleurs, que cette adjonction de charges a pour conséquence une diminution de la résistance au choc des produits obtenus ; il s'agit là, spécialement dans le cas des tubes extrudés, et notamment de ceux utilisés comme conduites pour l'évacuation des eaux usées ou des eaux fluviales qui sont souvent manipulés dans des conditions difficiles, d'un obstacle majeur à l'utilisation de polypropylène chargé.

Des mesures selon l'essai au mouton pendulaire IZOD effectuées sur éprouvette entaillée à une température de 22 $\pm$2 °C et sur différents produits obtenus à partir de polypropylène pur et de ce même polypropylène additionné de différentes charges, illustrent bien cet abaissement de la résistance au choc.

Les résultats rassemblés dans le Tableau I sont exprimés en Joules/25 mm.

## TABLEAU I

| Polypropylène sans ajout | 5,34 |
|---|---|
| − + 20 % $CO_3Ca$ | 1,45 |
| − + 40 % $CO_3Ca$ | 0,91 |
| − + 50 % $CO_3Ca$ | 0,55 |
| − + 30 % farine de bois | 0,74 |
| − + 40 % farine de bois | 0,68 |
| − + 50 % farine de bois | 0,60 |

La présente invention s'est donné pour objet de pallier ces inconvénients en proposant de nouvelles compositions de résines de polypropylène fortement chargées, à au moins 50 % de carbonate de calcium, de résistance au choc fortement améliorée.

Les inventeurs ont, en effet, déterminé, de façon surprenante, que l'adjonction au mélange résine-charges de composés choisis parmi les sels alcalinoterreux d'acides gras saturés et les cires de polyéthylène oxydées permettait d'obtenir des compositions utilisables dans l'extrusion de tubes ou de profilés ainsi que dans l'injection ou le moulage de pièces diverses et dont la résistance au choc est de 5 à 10 fois supérieure à celle des produits obtenus jusqu'alors avec des résines de polypropylène chargées de façon classique et ceci même pour un taux élevé de charges.

Il faut noter que cet effet d'amélioration spectaculaire de la résistance au choc pour des résines aussi chargées est extrêmement surprenant. On connaissait, en effet, certains documents citant l'utilisation de sels alcalinoterreux ou de cires de polyéthylène comme additifs dans des compositions de résines de polypropylène. Mais, il s'agit toujours de compositions dans lesquelles le pourcentage de charge par rapport au polypropylène reste relativement faible. C'est ainsi que le FR-A-2 019 547 utilise, pour une composition de polypropylène chargé à 35 % de fibres d'amiante, entre 5 et 25 parties de sels alcalinoterreux et ceci dans le seul but d'améliorer la rigidité des matières à mouler, rigidité que l'on sait être souvent néfaste à la tenue au choc. Il faut, de plus, noter que cette amélioration de la rigidité ne peut être obtenue que grâce à la combinaison de trois éléments : un sel alcalinoterreux, un butadiène huileux, un péroxyde.

Les compositions faisant l'objet du US-A-4 436 863 sont constituées d'un mélange polypropylène-talc. Il ressort de ce brevet que l'adjonction de polyéthylène oxydé ne permet que de conserver, pour un pourcentage donné de talc, les caractéristiques de tenue au choc, sans nullement enrayer leur chute lorsque le taux de talc augmente.

Selon un mode de réalisation préféré de l'invention, les sels alcalinoterreux d'acides gras saturés et les cires de polyéthylène oxydées sont ajoutés, avant toute opération d'injection ou d'extrusion, au mélange polypropylène chargé dans une proportion allant de 0,5 à 5 % en poids du polypropylène.

Le poids moléculaire des cires de polypropylène oxydées est de préférence égal ou supérieur à 6 000.

La présente invention sera mieux comprise et ses avantages ressortiront mieux de la description qui suit des exemples qui l'illustrent sans aucunement la limiter.

Exemple 1 :

On extrude des tubes à partir d'un mélange 50/50 en poids de poudre de polypropylène et de carbonate de calcium auquel on ajoute des quantités croissantes de stéarate de calcium.

Les tubes ainsi obtenus sont soumis à l'essai de la "masse tombante" tel que décrit dans la norme américaine ASTM D 2444-80.

Le poids de la masse est de 3 kg et le mouton (tup) choisi est le Tup A.

Les résultats exprimés en hauteur de chute sont rassemblés dans le tableau II ci-après :

### TABLEAU II

| | Polypropylène/$CO_3Ca$ 50/50 sans additif | Idem + Stéarate de calcium | | |
|---|---|---|---|---|
| | | 1 p.c.r. | 3 p.c.r. | 4 p.c.r. |
| Hauteur moyenne* de chute(en mètres) | 0,81 | 0,95 | 2,08 | 2,3 |

* hauteur pour laquelle 50 % des éprouvettes sont cassées.

### Exemple 2 :

On reprend les conditions de l'exemple 1 mais on remplace le stéarate de calcium par une cire de polyéthylène de poids moléculaire supérieur à 6 000 telle que celle commercialisée par Allied Chemical sous la dénomination AC 316.

Les résultats obtenus sont rassemblés dans le tableau III.

### TABLEAU III

| | Polypropylène /$CO_3Ca$ 50/50 sans additif | Idem + cire de polyéthylène oxydée | | |
|---|---|---|---|---|
| | | 3 p.c.r. | 4 p.c.r. | 5 p.c.r |
| Hauteur moyenne* de chute(en mètres) | 0,81 | 1,40 | 1,75 | 1,95 |

* Hauteur pour laquelle 50 °/o des éprouvettes sont cassées.

On a pu déterminer, par ailleurs, que l'on obtenait avec les compositions selon l'invention, une chute maximum de 10 % par rapport aux valeurs obtenues avec du polypropylène non chargé (essais effectués

4

à 0°C).

L'invention concerne également les tubes obtenus directement par extrusion des compositions selon l'invention et qui présentent des propriétés mécaniques extrêmement intéressantes.

Ces tubes joignent à la rigidité nécessaire à leur usage une résistance au choc qui leur permet de supporter les manipulations dans des conditions difficiles.

L'invention concerne également les profilés et pièces diverses obtenus par injection ou moulage de ces compositions.

5

## - REVENDICATIONS -

1- Compositions de résines de polypropylène fortement chargées, à au moins 50 % de carbonate de calcium, caractérisées en ce qu'elles comportent, en outre, une quantité relativement faible d'additif choisi parmi les sels alcalinoterreux d'acides gras saturés et les cires de polyéthylène oxydées.

2- Compositions selon la revendication 1, caractérisées en ce que les sels alcalinoterreux d'acides gras saturés sont des stéarates.

3- Compositions selon la revendication 1, caractérisées en ce que les cires de polyéthylène oxydées ont un poids moléculaire égal ou supérieur à 6 000.

4- Compositions selon l'une quelconque des revendications 1 à 3, caractérisées en ce que le pourcentage d'additif se situe entre 0,5 et 5 % en poids de résine.

5- Tubes et profilés résistant au choc obtenus à partir des compositions de résines de polypropylène chargées selon l'une quelconque des revendications 1 à 4.

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | DE-A-3 106 871 (IDEMITSU)<br><br>* Revendications 1-4 *<br><br>--- | 1,2,4,5 | C 08 K 3/26<br>C 08 L 23/12<br>C 08 K 9/04<br>C 08 K 9/08 //<br>(C 08 L 23/12<br>C 08 K 3:26 |
| X,D | US-A-4 436 863 (P.J. ALBEE)<br>* Colonne 3, lignes 59-66 *<br><br>--- | 1,3-5 | C 08 K 5:09 )<br>(C 08 L 23/12<br>C 08 K 9:04 )<br>(C 08 L 23/12 |
| A,T | FR-A-2 440 382 (PONT-A-MOUSSON)<br>* Page 1, lignes 4-23; page 2, ligne 34 - page 3, ligne 8 *<br><br>--- | 1,5 | C 08 K 3:26<br>C 08 L 23:30 )<br>(C 08 L 23/12<br>C 08 K 9:08 ) |
| A,T | US-A-4 153 587 (H. YUI)<br>* Résumé; colonne 4, lignes 33-68 *<br><br>--- | 1 | |
| A | FR-A-2 094 870 (SOCIETE INDUSTRIELLE DES COMPRIMES DE L'OUEST)<br>* Revendications 1,2 *<br><br>----- | 1 | DOMAINES TECHNIQUES RECHERCHES (Int. Cl.4)<br><br>C 08 K<br>C 08 L |

Le présent rapport de recherche a été établi pour toutes les revendications

| Lieu de la recherche | Date d'achèvement de la recherche | Examinateur |
|---|---|---|
| LA HAYE | 29-07-1986 | GOOVAERTS R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82